# EUROPÄISCHE PATENTANMELDUNG

(11) **EP 1 003 259 A1**
(43) Veröffentlichungstag der Anmeldung: **24.05.2000**
(21) Anmeldenummer: 99122504.6
(22) Anmeldetag: 11.11.1999
(51) Int. Cl.: H02B 1/30

(54) **Schaltschrank**

(30) Priorität: 20.11.1998 DE 19853611
(71) Anmelder: Skeppner, Hans, 1050 Brüssel (BE)
(72) Erfinder: Pochet, Luc, 1150 Brüssel (BE)
(74) Vertreter: Grünecker, Kinkeldey, Stockmair & Schwanhäusser Anwaltssozietät

(57) **Zusammenfassung**

Die Erfindung bezieht sich auf einen Schaltschrank mit einem Rahmengestell aus mehreren miteinander verbundenen Rahmenprofilen und daran befestigten Abdeckelementen, wie Seiten-, Tür-, Decken-, Rückwand- oder Bodenelemente. Jedes Rahmenprofil weist zwei im Abstand zueinander angeordnete, jeweils auf ein zugeordnetes Abdeckprofil aufdrückbare Dichtkanten bzw. -flächen auf. Die beiden Dichtkanten bzw. -flächen unterteilen die Außenflächen der Rahmenprofile in einen ersten, dem Schaltschrankinnenraum zugeordneten Seitenflächenbereich und einen zweiten, dem Schaltschrankinnenraum abgewandten Seitenflächenbereich. Die Flexibilität der Anbringung von Befestigungs- bzw. Abdeckelementen soll unter dem Gesichtspunkt eines möglichst geringen Dichtaufwandes erfolgen. Hierzu ist der zweite Seitenflächenbereich (29) zumindest der vertikalen Rahmenprofile (7) zum Schaltschrankinnenraum (30) hin vollständig geschlossen und umfasst mindestens einen zwischen den Dichtkanten bzw. -flächen (22, 25) längsverlaufenden, mit einer Lochreihe versehenen und auf der dem Schaltschrankinnenraum (30) abgewandten Außenseite des zweiten Seitenflächenbereichs (29) angeordneten, seitlich abstehenden Befestigungssteg (11, 12), wobei das Befestigen der Abdeckelemente an dem Befestigungssteg (11, 12) außerhalb des Schaltschrankinnenraums (30) ohne Durchdringung der Wandung der Rahmenprofile (7,6,9) zum Innenraum (30) des Schaltschrankes (1) hin erfolgt.

## Beschreibung

Die vorliegende Erfindung betrifft einen Schaltschrank mit einem Rahmengestell aus mehreren miteinander verbundenen Rahmenprofilen und daran befestigten Abdeckelementen, wie Seiten-, Tür-, Decken-, Rückwand- oder Bodenelemente, wobei jedes Rahmenprofil zwei im Abstand zueinander angeordnete, jeweils auf ein zugeordnetes Abdeckelement aufdrückbare Dichtkanten bzw. -flächen aufweist, wobei die beiden Dichtkanten bzw. -flächen die Außenflächen der Rahmenprofile in einen ersten, dem Schaltschrankinnenraum zugeordneten Seitenflächenbereich und einen zweiten, dem Schaltschrankinnenraum abgewandten Seitenflächenbereich unterteilen.

Ein solcher Schaltschrankaufbau ist z.B. aus der DE 33 44 598 C1 bekannt. Es handelt sich hierbei um ein Rahmengestell für einen Schaltschrank, das aus mindestens zwölf miteinander verbundenen Rahmenschenkeln desselben Hohlprofils besteht. Das Hohlprofil ist hierbei mit Lochreihen versehen und weist einen im Wesentlichen quadratischen Querschnitt auf. In Verlängerung der einen Seitenkante des Hohlprofils ist ein gerader Schenkel angeordnet, der gegen eine Dichtung, z.B. einer Tür drückt. In Verlängerung der anderen Seitenfläche des Hohlprofils, die senkrecht zur ersten angeordnet ist, ist ein L-förmiger Schenkel angeordnet, wobei der eine L-Schenkel unter Zwischenfügung einer Dichtung gegen ein Seitenabdeckelement gedrückt ist. Die Anbringung der verschiedenen außen angeordneten Elemente an dem Hohlprofil erfolgt mittels Schrauben, die durch Öffnungen an der Innenseite des Hohlprofils eingeschoben und mit ihren Köpfen im Inneren des Hohlprofils angeordnet sind. Der L-Schenkel weist an bestimmten Stellen Ausnehmungen auf, um Verbindungshülsen der Abdeckelemente zu positionieren. Die Öffnungen zum Durchstecken der Schrauben sind jedoch nur an bestimmten Stellen fest vorgegeben, da an diesen Stellen jeweils eine Abdichtung erfolgen muß. Die Flexibilität zur Anbringung äußerer Elemente wird hierdurch nachhaltig beeinflußt.

Ein Rahmengestell aus Profilholmen, insbesondere für einen Schaltschrank, ist in der DE 4036664 A1 beschrieben. Die rohrförmig geschlossenen Hohlprofile weisen einen zum Schaltschrankinnenraum gerichteten L-förmigen Wandabschnitt und einen nach außen gerichteten W-förmig gestuften Wandabschnitt auf. An den Schnittstellen der beiden Wandabschnitte sind Flansche vorgesehen. Einer der Flansche ist noch um einen doppelt aufeinander gelegten Steg ergänzt. Das Hohlprofil weist sowohl an seinem Innenwandbereich als auch an seinem Außenwandbereich Durchbrüche bzw. Löcher auf, die für die unterschiedlichsten, zu befestigenden Elemente dienen.

Aus der DE 19536949 C2 ist eine Rahmenschenkel für ein Rahmengestell eines Schaltschrankes bekannt. Dieser Rahmenschenkel ist aus zwei miteinander verbundenen Profilblechen hergestellt. Im Wesentlichen weist das Hohlprofil eine Dreiecksform auf, wobei an der Verbindungsstelle der beiden Bleche jeweils ein Umbugsteg gebildet ist. Die eine Wand des Hohlprofils ist vollständig geschlossen.

Es ist daher die Aufgabe der vorliegenden Erfindung, einen Schaltschrank der eingangs genannten Art bereitzustellen, der flexibel in der Anordnung von außen angebrachten Abdeckelementen ist.

Diese Aufgabe wird erfindungsgemäß dadurch gelöst, dass der zweite Seitenflächenbereich zumindest der vertikalen Rahmenprofile zum Schaltschrankinnenraum hin vollständig geschlossen ist und mindestens einen zwischen den Dichtkanten bzw. -flächen längsverlaufenden, mit einer Lochreihe versehenen und auf der dem Schaltschrankinnenraum zugewandten Außenseite des zweiten Seitenflächenbereichs angeordneten, seitlich abstehenden Befestigungssteg umfaßt, wobei das Befestigen der Abdeckelemente an dem Befestigungssteg außerhalb des Schaltschrankinnenraums ohne Durchdringung der Wandung der Rahmenprofile zum Innenraum des Schaltschranks hin erfolgt.

Zur Befestigung der Abdeckelemente sind eigens dafür vorgesehene Befestigungsstege vorhanden, die dem zweiten Seitenflächenbereich zugeordnet sind. Das bedeutet aber auch, dass ohne jegliches Abdichtungsproblem eine vorgegebene Lochreihe mit z.B. Löchern in vorgegebenen gleichbleibendem Abstand in diesen angeordnet sein kann. Die Bereitstellung einer großen Anzahl von Befestigungsmöglichkeiten ist aufgrund der nicht erforderlichen Abdichtung hinsichtlich der Flexibilität der Anbringung von Abdeckelementen von besonderem Vorteil. Die bislang verwendeten Öffnungen zur Anbringung wurden zum Teil bei der Montage gefertigt, damit nur an diesen Stellen ein Durchgang zum Schaltschrankinnenraum vorhanden und die Abdichtung vereinfacht war. Auch die Anordnung des Befestigungsstegs zwischen den Dichtkanten bzw. -flächen vereinfacht die Anbringung, da die Dichtkanten bzw. - flächen nicht selbst von einem Befestigungselement durchdrungen sind, wie das z.B. bei dem L-Schenkel der DE 33 44 598 C1 der Fall ist. Obwohl es aufgrund von Sonderanfertigungen oder zur Anbringung von Eckverbindern sein kann, dass vereinzelt Durchbrüche im Rahmenprofil angeordnet sind, ist es bevorzugt, wenn der zweite Seitenflächenbereich zum Schaltschrankinnenraum hin vollständig geschlossen ist.

Wichtig ist insbesondere, dass die Befestigungsmittel für die Abdeckelemente sich nicht durch den zweiten Seitenflächenbereich zum Schaltschrankinnenraum hin erstrecken, sondern mittels der Lochreihe am Befestigungssteg angebracht werden.

Damit der Befestigungssteg auch als großflächige Anlage dient, kann dieser im Wesentlichen parallel zu dem zugeordneten, daran befestigten Abdeckelement angeordnet sein.

Um senkrecht zueinander angeordnete Abdeckelemente in gleicher Weise möglichst großflächig anbringen zu können, sind bevorzugt zwei Befestigungsstege am zweiten Seitenflächenbereich im Abstand und im rechten Winkel zueinander angeordnet. Betrachtet man das gesamte Rahmengestell, so können die Befestigungsschenkel auf jeder Seite jeweils einen großflächigen Befestigungsrahmen bilden, der das Anbringen der Abdeckelemente sehr stark vereinfacht. Da an diesen Befestigungsstellen nicht abgedichtet werden braucht, erfolgt eine genau definierte Anlage der Abdeckelemente an den Befestigungsstegen, so dass an anderer Stelle eine Abdichtung mit einer genau vorgegebenen Vorspannung und somit einem vorbestimmbaren Aufdrücken auf eine Dichtung erfolgen kann.

Damit die Rahmenprofile von einer Seite her besonders gut zugänglich ausgestaltet sind, können zwei Befestigungsstege am zweiten Seitenflächenbereich im Abstand und parallel zueinander angeordnet sein. Dies eignet sich insbesondere bei in Nischen angeordneten Schaltschränken, da hierdurch der Zugriff zur Anbringung der Befestigungsmittel von der Zugriffsseite her günstiger ist.

Eine sehr kompakte Bauform der Rahmenprofile sieht vor, dass der Befestigungssteg im Querschnitt eine L-Form aufweist, wobei der erste L-Schenkel im Wesentlichen rechtwinklig zu einem zweiten L-Schenkel angeordnet ist. Jeder L-Schenkel kann dann mit einer eigenen Lochreihe versehen sein, so dass ein einziger Befestigungssteg zur Befestigung in zwei Ebenen ausreicht.

Bei einer weiteren Ausführungsform ist vorgesehen, dass der Befestigungssteg im Abstand zu einem geschlossenen Wandabschnitt des zweiten Seitenflächenbereichs derart angeordnet ist, dass auf der einem anbringbaren Abdeckelement abgewandten Seite des Befestigungsstegs eine Einführnut gebildet ist, in die seitlich die Lochreihe mündet. Die Einführnut kann zur Aufnahme eines Schraubenkopfes oder einer Mutter oder jeglichen anderen speziell ausgeformten Befestigungselementes dienen, so dass ein Anbringen der Abdeckelemente von außerhalb des Rahmengestells einfach möglich ist, ohne dass ein Zugang vom Schaltsohrankinnenraum notwendig ist. Obwohl sicherlich die Verwendung von Normmuttern bevorzugt wird, kann in der Einführnut ein speziell angeordnetes Mutterelement, das verdrehsicher in der Einführnut gehalten ist, angeordnet werden, auf das über ein Loch der Lochreihe Zugriff erlangt wird. Das Festschrauben kann dann von außerhalb erfolgen, ohne dass ein Zugriff auf das Mutterelement nötig ist.

Aus Gründen der Stabilität und des geringen Gewichtes ist es bevorzugt, wenn zumindest ein Rahmenprofil aus einem Hohlrohrprofil geformt ist und der mindestens eine Befestigungssteg sich von dem Hohlraum des Hohlprofils weg erstreckt, so dass die Lochreihe nicht mit dem Hohlraum in Verbindung steht. Das bedeutet, dass der Befestigungssteg keinen Wandbereich des Hohlraums bildet, sondern seitlich an dem Hohlrohrprofil angeformt ist. Hierdurch ist gewährleistet, dass die Lochreihe nicht für eine Verbindung zwischen Schaltrauminnenraum und -außenraum sorgt.

Um möglichst wenig Material zur Verwirklichung der erfindungsgemäßen Lösung zu benötigen, kann gemäß einer Variante der mindestens eine Befestigungssteg unmittelbar an dem Hohlraum des Hohlrohrprofils angrenzen. Es ist somit nicht erforderlich, den Befestigungssteg kompliziert an das Profil anzuformen.

Bevorzugt können die Hohlrohrprofile durch einen Rollformvorgang hergestellt sein, wobei die Befestigungsstege durch aufeinander Falten zweier Wandabschnitte vom Hohlraum getrennt sind. Diese Art der Herstellung von Hohlrohrprofilen hat sich im Bereich der Rahmengestelle für Schaltschränke bewährt und gewährleistet die Verwendung z.B. von Stahlwerkstoffen. Das aufeinander Falten von mindestens zwei Wandabschnitten kann durch diese Technik derart erfolgen, dass eine ausreichende Abdichtung zwischen Befestigungssteg und Hohlprofil des Profils erzeugt ist. Der Befestigungssteg kann als einstückiges Bauelement mit doppelter Wandstärke angesehen werden.

Damit die Dichtkante bzw. -fläche nicht zu scharfkantig ausfällt, ist diese bevorzugt von einem Wandbereich des Rahmenprofils geformt, der einen Bereich des Hohlraums umgrenzt. Dadurch ergibt sich weiter, dass der Befestigungssteg von dem die Dichtkante bzw. -fläche bildenden Abschnitt getrennt ausgestaltet sein muß. Allerdings kann er an diesen angrenzen.

Es besteht auch die Möglichkeit, dass die Dichtkante bzw. -flache von einem Dichtsteg geformt ist. Dieser kann für ein großflächiges Andrücken auch einen Bereich des Hohlraums umgrenzen.

Darüber hinaus kann der Dichtsteg eine Stirnfläche aufweisen und sich mindestens ein Befestigungssteg in Verlängerung der Stirnfläche oder leicht parallel versetzt zu dieser erstrecken. Das bedeutet, dass die Befestigung der Abdeckelemente unmittelbar neben der Dichtstelle erfolgen kann. Diese Anordnung des Befestigungsstegs eignet sich insbesondere zur Anbringung der Seiten-, Decken- und Bodenwand, da diese auf jeden Fall bleibend mit ihrer Dichtung an den Rahmenprofilen anliegen.

Im Gegensatz hierzu kann sich mindestens ein Befestigungssteg am Fuße des Dichtstegs senkrecht zu diesem erstrecken. Diese Anordnungsvariante wird bevorzugt bei Tür- und Rückwandelementen angeordnet, da hier in aller Regel stabilere Befestigungen vorgesehen werden müssen, die mehr Platz beanspruchen.

Des Weiteren ist bevorzugt in dem ersten Seitenflächenbereich mindestens eine Lochreihe zum Anbringen von Einbauten im Schaltschrankinnenraum vorgesehen.

Damit auch diese Lochreihe möglichst einfach vom Schaltschrankinnenraum aus zugänglich ist, kann weiter durch die Form zumindest eines Bereichs der Wandung des ersten Seitenflächenbereichs mindestens eine Zugriffsnut in den ersten Seitenflächenbereich eingeformt sein, die einen Zugriff auf die Rückseite der mindestens einen Lochreihe gewährt. Auch hier können ähnlich der Einführnut an dem zweiten Seitentlächenbereich Muttern oder speziell ausgestaltete Befestigungselemente eingeführt und hauptsächlich mittels Schrauben unter Eingriff in ein Loch der Lochreihe befestigt werden.

Da die Abdichtung des Schaltschrankinnenraums zum äußeren durch den geschlossenen zweiten Seitenflächenbereich erfolgt, kann die Lochreihe in dem ersten Seitenflächenbereich ohne weiteres sich in den Hohlraum des Hohlprofils erstrecken. Zusätzlich können die Zugriffsnuten an ihrem Grund Öffnungen aufweisen, die mit den Löchern der Lochreihe fluchten, so dass die Zugriffsnuten nicht so groß, wie die Eingriffsnuten, am zweiten Seitenaußenflächenbereich ausfallen müssen. Lediglich der Vollständigkeit halber wird darauf hingewiesen, dass die Anbringung der Einbauten im Schaltschrank selbstverständlich mit ähnlich ausgestalteten Befestigungsstegen ohne Zugriff auf den Hohlraum des Hohlprofils erfolgen kann.

Des Weiteren kann am zweiten Außenflächenbereich an jeweils einem an den Hohlraum angrenzenden Wandbereich eine L-förmige Leiste angeordnet sein, deren erster L-Schenkel im Wesentlichen senkrecht auf dem zugeordneten Wandbereich und der zweite L-Schenkel im Wesentlichen parallel zu dem zugeordneten Wandbereich angeordnet ist, wobei der zweite L-Schenkel den Befestigungssteg bildet. Es handelt sich hierbei um eine einfache Ausgestaltung der gewünschten Profile, wobei der Nutgrund der Einführnut jeweils von dem ersten L-Schenkel gebildet werden kann. Die Breite der Einführnut hängt dann von dem Abstand des Befestigungsstegs zu dem zugeordneten Wandbereich ab.

Vorteilhaft für das Einführen von Befestigungselementen kann es sein, wenn die freien Endkanten der Befestigungsstege voneinander weg weisen.

Im Folgenden werden Ausführungsbeispiele der Erfindung anhand einer Zeichnung näher erläutert. Es zeigen:
- Fig. 1: eine schematische, perspektivische Darstellung eines Schaltschranks,
- Fig. 2: eine perspektivische Darstellung der oberen vorderen Ecke des Rahmengestells eines Schaltschranks,
- Fig. 3: eine perspektivische Darstellung der vorderen unteren rechten Ecke von dem Schaltschrankinnenraum aus gesehen,
- Fig. 4: eine Querschnittsdarstellung des vorderen linken Vertikalprofils mit Anbauten
- Fig. 5: eine Querschnittsansicht eines oberen rechten Querprofils,
- Fig. 6: eine Querschnittsansicht einer Variante des vorderen linken Vertikalprofils mit Anbauten,
- Fig. 7: eine Querschnittsdarstellung einer Verbindungsvariante von zwei vorderen Vertikalprofilen,
- Fig. 8: eine Querschnittsdarstellung eines unteren Horizontalprofils mit einer Zierleiste,
- Fig. 9: eine Querschnittsdarstellung eines unteren Horizontalprofils mit angebrachtem Scharnierelement,
- Fig. 10: eine Querschnittsansicht der vorderen beiden Vertikalelemente mit Anbringung der Tür,
- Fig. 11: eine Querschnittsansicht der Erdungs- und Abschirmvarianten an den Vertikalprofilen,
- Fig. 12: eine Querschnittsdarstellung einer Variante des vorderen linken Vertikalprofils mit Anbauten,
- Fig. 13: eine perspektivische Darstellung der oberen vorderen Ecke des Rahmengestells eines Schaltschranks, das aus einer weiteren Ausführungsform von Rahmenprofilen besteht,
- Fig. 14: eine schematische Querschnittsdarstellung der Anordnung mehrerer Rahmengestelle nebeneinander,
- Fig. 14a: die vergrößerte Darstellung der Aneinanderfügung der Vertikalprofile mehrerer nebeneinander angeordneter Rahmengestelle,
- Fig. 15: eine Querschnittsdarstellung einer Variante des vorderen linken Vertikalprofils mit Wandelementen,
- Fig. 16: eine Querschnittsdarstellung einer Variante des vorderen linken Vertikalprofils mit Wandelementen,
- Fig. 17: eine Querschnittsdarstellung einer Variante des vorderen linken Vertikalprofils mit Wandelementen,
- Fig. 18: eine Querschnittsdarstellung einer Variante des vorderen linken Vertikalprofils mit Wandelementen,
- Fig. 19: eine Querschnittssdarstellung einer Variante des vorderen linken Vertikalprofils mit Wandelementen,
- Fig. 20: eine Querschnittsdarstellung einer Variante des vorderen linken Vertikalprofils mit Wandelementen,
- Fig. 21: eine Querschnittsdarstellung einer Variante des vorderen linken Vertikalprofils mit Wandelementen, und
- Fig. 22: eine Querschnittsansicht einer Variante des vorderen linken Vertikalprofils mit Wandelementen.

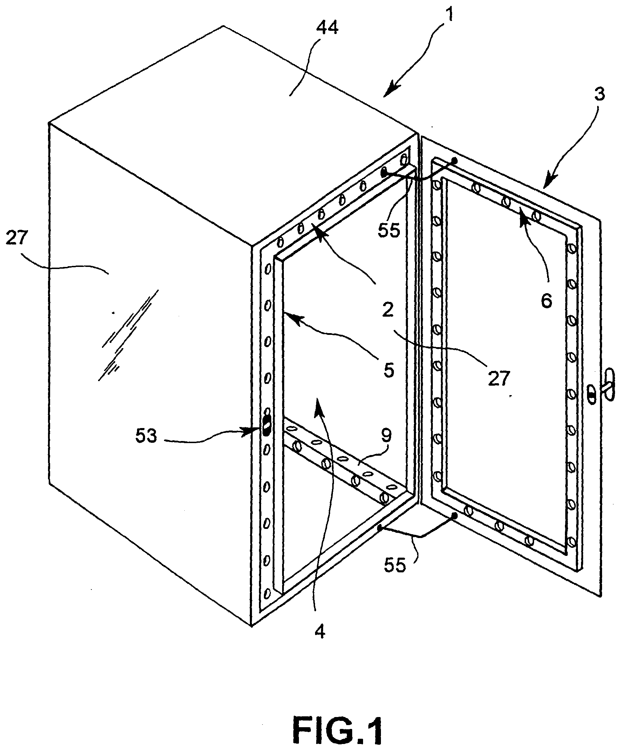

In Fig. 1 ist ein Schaltschrank 1 schematisch dargestellt, der ein Rahmengestell 2 aus Rahmenprofilen umfaßt, an denen die verschiedensten Elemente angebracht sind. Z.B. ist an dem vorderen Rahmenprofil eine Tür 3 schwenkbar angeordnet, die eine rechteckige Türöffnung 4 des Schaltschranks 1 verschließt. Der Schaltschrank 1 weist an seiner vorderen Seite einen umlaufenden Dichtstegrahmen 5 auf, in den der Türrahmen 6 eingreift.

Das Rahmengestell 2 des Schaltschranks 1 besteht aus zwölf miteinander verbundenen Rahmenprofilen. Es handelt sich hierbei um vier Vertikalprofile 7, vier Horizontalprofile 8 und vier Querprofile 9. Während der Querschnitt der Vertikalprofile 7 und der Horizontalprofile 8 identisch ist, weist das Querprofil 9 einen etwas anderen Querschnitt auf.

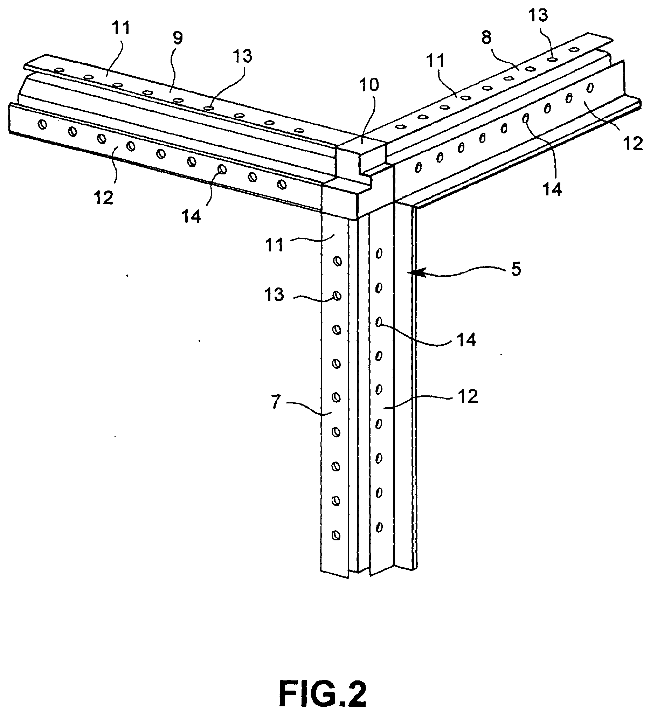

In der Fig. 2 ist die obere linke Ecke eines Rahmengestells 2 dargestellt. Hierzu wird ein Eckverbinder 10 verwendet, der in nicht näher beschriebener Weise jeweils an den einzelnen Profilen verankert ist, so dass diese jeweils 90° zueinander angeordnet sind. Sämtliche verwendeten Profile 7, 8, 9 sind Hohlrohrprofile, die durch Rollformen aus einem Stahlblech hergestellt sind. Jeweils im Wesentlichen in der Ebene anzubringender Abdeckelemente weisen die Profile 7, 8, 9 einen parallel bzw. in der Ebene verlaufenden Befestigungssteg 11 bzw. 12 auf Um eine im Wesentlichen beliebige Anbringung der Abdeckelemente durchzuführen, ist jeder Befestigungssteg mit einer Lochreihe von Löchern 13 bzw. 14 versehen, die jeweils im Abstand zur Kante des Befestigungsstegs 11 bzw. 12 angeordnet sind und einen gleichmäßigen Abstand zueinander aufweisen.

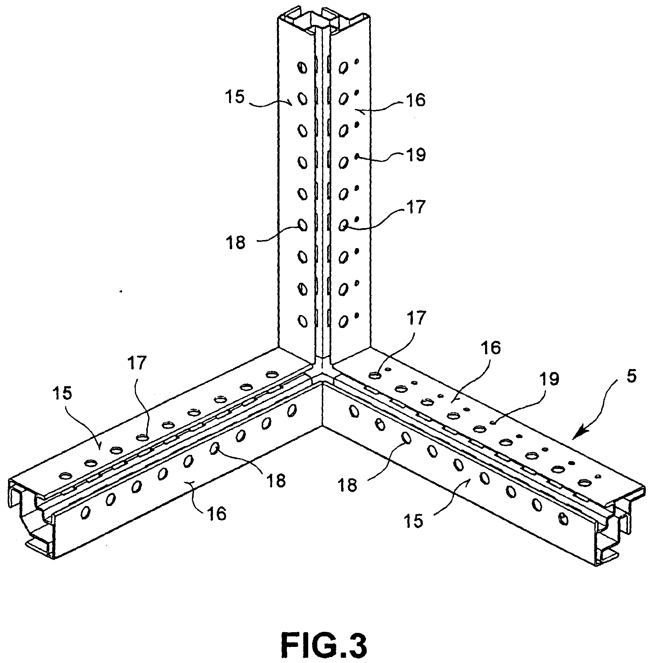

In Fig. 3 ist die diagonal gegenüberliegende Ecke des Türrahmens 6 vom Schaltrauminnenraum aus gesehen, dargestellt. Auch die Innenseiten 15 bzw. 16 sind jeweils mit in einer Lochreihe angeordneten Löchern 17 bzw. 18 versehen. Die Profile 7, 8 des Dichtstegrahmens 5 weisen sogar eine zusätzliche Lochreihe mit kleineren Löchern 19 auf, die parallel zu der Lochreihe mit den Löchern 17 angeordnet ist.

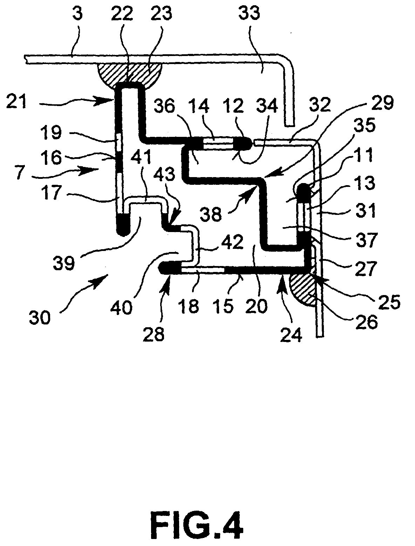

Anhand der Fig. 4 wird nunmehr der Querschnitt eines Vertikalprofils näher erläutert. Die Innenseiten 15 und 16 sind senkrecht zueinander angeordnet und auch die Achsen der Löcher 18 und 17 bzw. 19 sind senkrecht zueinander ausgerichtet. Die Wandung des Vertikalprofils 7 umgibt einen Hohlraum 20, in den die Löcher 17, 18 und 19 münden.

Es ist jedoch auch zu erkennen, dass die Löcher 13 und 14 in den Befestigungsstegen 11 und 12 keine Verbindung zum Hohlraum 20 aufweisen. In Verlängerung der Innenseite 16 des Vertikalprofils 7 ist ein, ebenfalls einen Bereich des Hohlraums 20 umgebender Dichtsteg 21 angeordnet, der mit einer stirnseitigen Dichtfläche 22 auf eine Dichtung 23 einer Tür 3 drückt. Aus Vereinfachungsgründen wurde der Türrahmen 6 nicht eingezeichnet. Ebenso weist die Innenseite 15 in Verlängerung einen, einen Bereich des Hohlraums 20 umgebenden Dichtsteg 24 auf, der eine Dichtkante 25 bereitstellt, die gegen eine Dichtung 26 eines Seitenwandelementes 27 gedrückt ist.

Da die Dichtstege 21 und 24 und die zugehörigen Dichtungen 23 bzw. 26 über die gesamte Länge des Vertikalprofils 7 verlaufen, werden die Seitenwände des Hohlprofils in einen ersten Seitenflächenbereich 28 und einen zweiten Seitenflächenbereich 29 unterteilt. Der erste Seitenflächenbereich 28 ist dem Schaltschrankinnenraum 30 zugewandt und der zweite Seitenflächenbereich 29 von diesem abgewandt. Sofern die Tür 3 geschlossen ist und die Dichtungen 23 bzw. 26 anliegen, ist die Außenseite des zweiten Seitenflächenbereichs 29 vollständig vom Schaltschrankinnenraum 30 entkoppelt. Damit dennoch die Abdeckelemente, z.B. die Tür 3 oder das Seitenwandelement 27, an dem Vertikalprofil 7 angeordnet werden können, sind die Befestigungsstege 11 und 12 am zweiten Seitenflächenbereich 29 vorgesehen. Diese werden durch aufeinander Falten eines Wandungsbereichs der Profilform gebildet, so dass zwischen diesen aufeinander gefalteten Wandungsbereichen kein Bestandteil des Hohlraums 20 existiert. Der Befestigungssteg 12 ist parallel zur Innenseite 15 und der Befestigungssteg 11 parallel zur Innenseite 16 ausgerichtet. Somit erstrecken sich die Befestigungsstege 11 bzw. 12 auch ebenfalls parallel zu der Tür 3 bzw. dem Seitenwandelement 27. Ebenfalls in der Fig. 4 ist zu erkennen, dass das Seitenwandelement 27 eine Öffnung 31 für eine Senkkopfschraube aufweist, die mit der Öffnung 13 im Befestigungssteg 11 fluchtet. Darüber hinaus weist das Seitenwandelement 27 einen nach innen umgebogenen Rand 32 auf, der exakt in Verlängerung des Befestigungssteges 12 angeordnet ist.

Der Befestigungssteg 12 erstreckt sich senkrecht vom Fußbereich des Dichtungsstegs 21 und weist somit einen vorbestimmten parallelen Abstand zur Tür 3 auf. Der so zwischen der Tür und dem Befestigungssteg 12 gebildete Hohlraum 33 dient zur Anordnung größerer Verbindungselemente, wie Scharniere usw., auf die im Folgenden noch näher eingegangen wird.

Das Vertikalprofil 7 ist so ausgeformt, dass auf der Rückseite 34 bzw. 35 der Befestigungsstege sich jeweils eine Einführnut 36 bzw. 37 befindet. Die Einführnuten 36 und 37 sind jeweils rechteckig im Querschnitt und ihre Öffnungen weisen aufeinander zu, so dass eine nach innen versetzte rechtwinklige Ecke 38 gebildet ist. Da die freien Enden der Befestigungsstege 11 und 12 im Abstand zueinander angeordnet sind, sind die Einführnuten 36 und 37 frei zugänglich und geeignete, nicht dargestellte Befestigungselemente, wie speziell ausgestaltete oder der Norm entsprechende Mutterelemente, sind in diese einführbar. Daraus ergibt sich, dass die Befestigung der Abdeckelemente am zweiten Seitenflächenbereich 29 ohne jegliche Durchdringung der Wandung und Eingriff in den Hohlraum 20 erfolgen kann.

Der Befestigungssteg 11 ist in Verlängerung der Stirnseite des Dichtstegs 24 angeformt, so dass eine Verbindung des Seitenwandelementes 27 unmittelbar neben der Dichtung 26 mit dem Vertikalprofil 7 erfolgen kann.

In ähnlicher Weise wie beim zweiten Seitenflächenbereich 29 ist am ersten Seitenflächenbereich ebenfalls eine Einformung derart vorgenommen, dass jeweils rechtwinklig zueinander angeordnete Zugriffsnuten 39 bzw. 40 angeordnet sind. Da der erste Seitenflächenbereich 28 eine Verbindung zum Hohlraum 20 aufweisen kann, sind in den Grund der Zugriffsnuten 39, 40 jeweils Durchbrüche 41 bzw. 42 eingeformt. Durch die im Querschnitt rechteckigen Zugriffsnuten 39 bzw. 40 wird eine nach innen versetzte Ecke 43 geformt. Die Zugriffsnuten 39 bzw. 40 dienen jeweils zur Anordnung von Befestigungselementen, wie Einschraubmuttern, um Inneneinbauten im Schaltschrank zu befestigen.

Zwar wurde anhand der Fig. 4 lediglich ein Vertikalprofil 7 beschrieben, jedoch weisen die Horizontalprofile 8 einen gleichen Querschnitt auf, weshalb die obige Beschreibung im Wesentlichen identisch auf die Horizontalprofile 8 übertragen werden kann. Anstelle des Seitenwandelementes 27 wird an den Horizontalprofilen 8 ein Deckelelement bzw. Bodenelement angebracht.

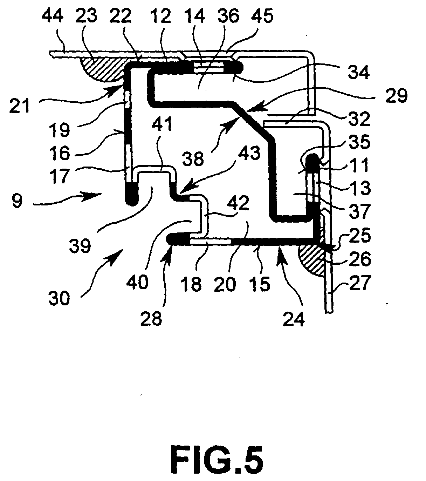

Anhand der Fig. 5 wird nunmehr der Querschnitt des zugehörigen Querprofils 9 näher erläutert. Es sei darauf hingewiesen, dass der erste Seitenflächenbereich 28 identisch den Vertikal- bzw. Horizontalprofilen 7, 8 ausgestaltet ist. Auch der Befestigungssteg 11 ist zusammen mit der zugehörigen Einführnut 37 identisch ausgestaltet. Der hauptsächliche Unterschied besteht darin, dass der Befestigungssteg 12 in Verlängerung der Stirnseite 22 des Dichtstegs 21 angeformt ist. Der Befestigungssteg 12 ist aber weiterhin senkrecht zum Befestigungssteg 11 ausgerichtet und mit einer parallel an dessen Rückseite 34 angeordneten Einführnut 36 versehen. Da die Befestigungsstege 11 und 12 bzw. die Einführnuten 36, 37 etwas weiter auseinandergezogen sind, fällt auch der Hohlraum 20 etwas größer aus. Auch die Ecke 38 kann großzügig als Fase ausgestaltet sein. An dem Befestigungssteg 12 ist ein Deckenelement 44 mit zugehöriger Dichtung 23 mittels der Öffnung 45 und nicht dargestelltem Befestigungsmittel angebracht. Geeignete Befestigungsmittel können in bereits beschriebener Weise in die Einführnuten 36 bzw. 37 ohne Zugriff auf den Hohlraum 20 des Querprofils 9 verwendet werden. Ansonsten läßt sich die Beschreibung des obigen Profils vollständig übernehmen.

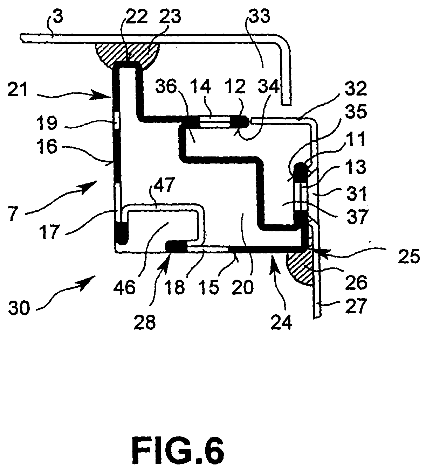

In der Fig. 6 ist ein gegenüber der Fig. 4 leicht abgewandeltes Vertikalprofil 7, das auch als Horizontalprofil 8 verwendet werden kann, dargestellt. Diesmal ist es so, dass der zweite Seitenflächenbereich 29 identisch der Fig. 4 ausgestaltet ist und die Änderungen lediglich am ersten Seitenflächenbereich 28 vorgenommen wurden, und zwar sind die Zugriffsnuten 39 und 40 zu einer einzigen Zugriffsnut 46 vereinigt worden. Hierdurch kann die Anbringung der Löcher 17 der Lochreihe mit einem größeren Abstand zur Stirnfläche 22 des Dichtstegs 21 erfolgen. Diese Ausgestaltung kann vorteilhaft bei einem entsprechend hohen Türrahmen 6 sein, damit die Anbringung der Inneneinbauten nicht behindert wird. Die Zugriffsnut 46 ist jeweils im Bereich der Löcher 17 und 18 mit einem durchgehenden Durchbruch 47 zur Anordnung von Befestigungselementen versehen.
reich der Löcher 17 und 18 mit einem durchgehenden Durchbruch 47 zur Anordnung von Befestigungselementen versehen.

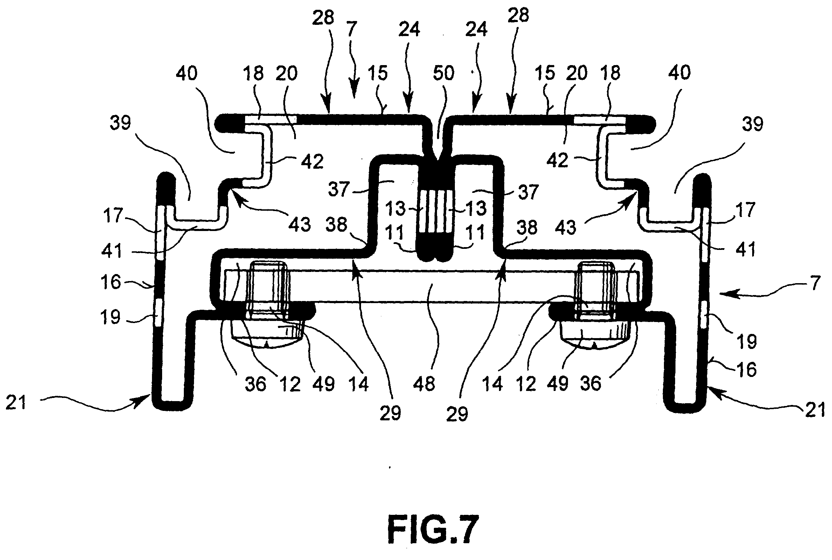

Anhand der Fig. 7 bis 11 werden nun im Folgenden einige Befestigungsvarianten unter Verwendung der oben beschriebenen Profile näher erläutert.

Fig. 7 zeigt die Verbindung zweier Vertikalprofile 7 durch Verwendung eines Verbindungsstegs 48, der mittels Schrauben 49, die durch die Löcher 14 der Befestigungsstege 12 hindurchgesteckt sind, angebracht ist. Bei den in Fig. 7 verwendeten Profilen weist der Befestigungssteg 11 jeweils einen leichten Versatz zur Stirnfläche des Dichtstegs 24 auf, so dass ein Spalt 50 gebildet ist, in den eine Dichtung eingefügt werden kann. Auf diese Weise können mehrere Rahmengestelle 2 nebeneinander ohne die Verwendung von Seitenwandelementen aufgestellt und miteinander verbunden werden.

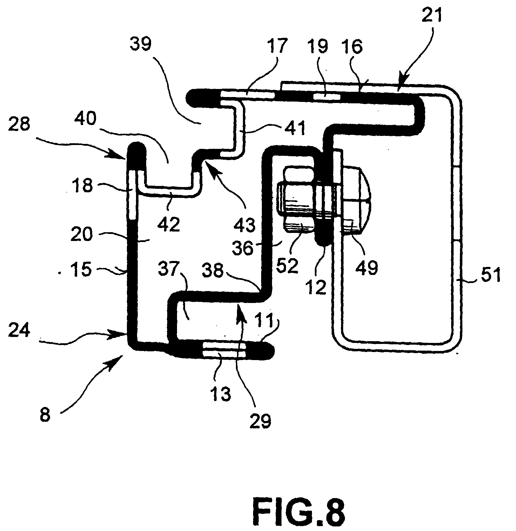

In der Fig. 8 ist die Verwendung einer Zierleiste 41 z.B. im Fußbereich dargestellt, um ein optisch ansprechendes Design zu erzielen. Sehr gut ist in der Fig. 8 die Anordnung einer Standardmutter 52 in der Nut 36 zu erkennen.

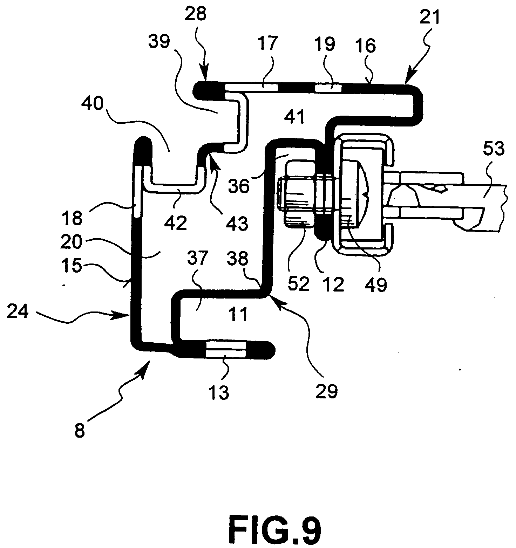

In Fig. 9 ist die Anbringung eines Türschließers 53 dargestellt. Dieser muß sich, wie in Fig. 1 dargestellt ist, nicht durch die Türöffnung 4 erstrecken, wodurch der Zugriff auf den Schaltschrank 1 behindert werden könnte. Vielmehr erfolgt die Anordnung außerhalb des Schaltschrankinnenraums 30 am Horizontalprofil 8.

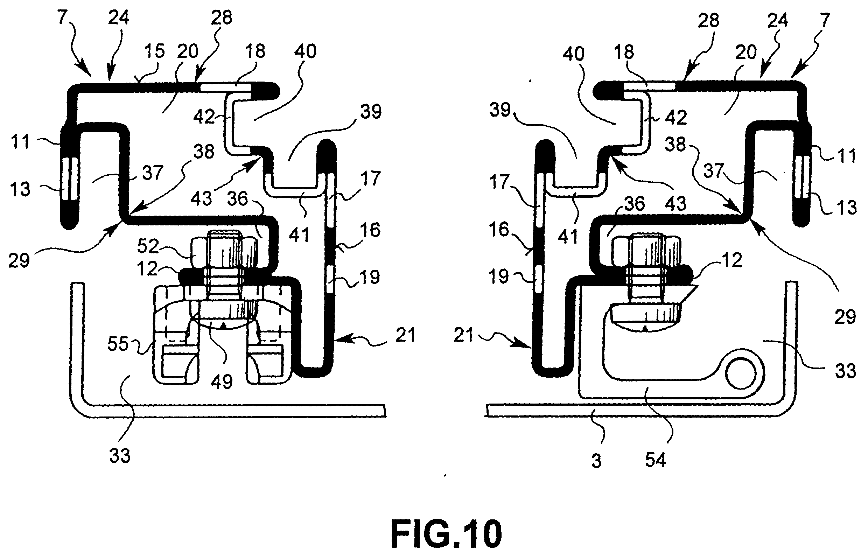

In Fig. 10 ist die Anbringung der Tür 3 mittels eines Scharniers 54 und einer Türverriegelung 55 dargestellt. Diese Elemente können jeweils an der Außenseite der Profile in der bereits beschriebenen Weise befestigt werden.

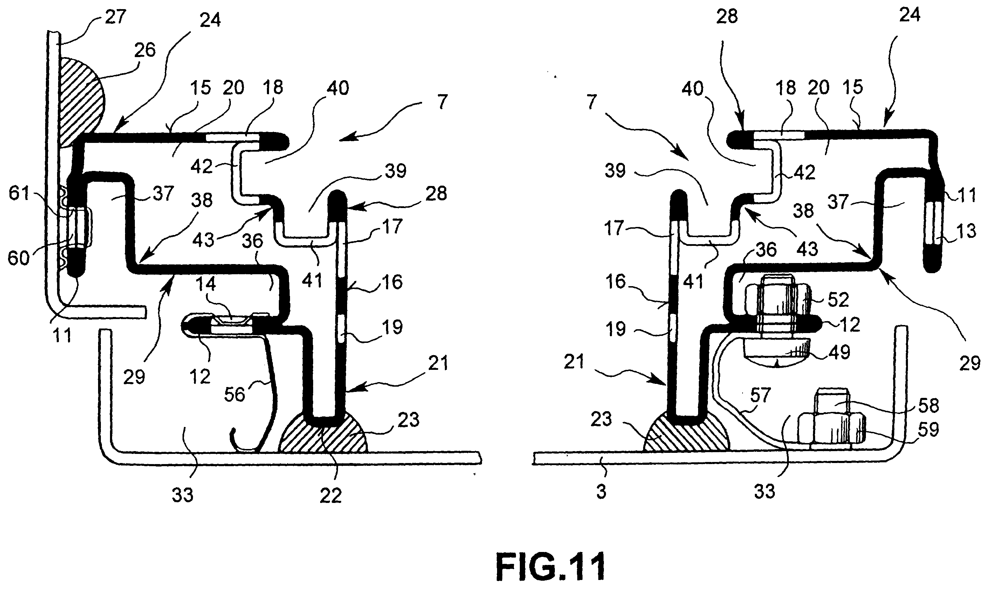

In Fig. 11 ist eine Erdungs- bzw. Abschirmvariante, z.B. der Tür 3, dargestellt. Auf der Öffnungsseite erfolgt die Erdung über einen mit dem Befestigungssteg 12 verbundenen Rastklipp 56, der auf die blanke bzw. galvanisierte Innenfläche der Tür 3 federnd aufdrückt. Bei der Verwendung von ebenfalls blanken bzw. galvanisierten Profilen ist hierdurch automatisch eine Erdung bzw. Abschirmung bereitgestellt. Auf der Scharnierseite der Tür erfolgt die Erdung bzw. Abschirmung mittels eines Litzendrahtes 57, der mittels einer Schraube 49 und einer Mutter 52 am Befestigungssteg 12 angeschraubt ist. Ein Gewindebolzen 58 auf der Innenseite der Tür 3 und eine zugehörige Mutter 59 sorgen für eine Befestigung des Litzendrahtes 57 an der Tür 3. Der Vollständigkeit halber sei darauf hingewiesen, dass die Anbringung derartiger Elemente an fast beliebiger Stelle erfolgen kann, da die Befestigungsstege 12 mit einer Lochreihe versehen sind.

Auf der linken Seite der Fig. 11 ist zu erkennen, dass in geeigneter Weise auch die Seitenwandelemente 27 einer Erdung bzw. Abschirmung unterzogen werden können. Diese können an geeigneter Stelle einen in die Öffnung 13 einsteckbaren Vorsprung 60 aufweisen, der mittels einer Halteklammer 61 in dem Loch 13 verriegelt ist. Sollte das Seitenwandelement 27 auf der Innenseite lackiert sein, kann die Halteklammer 21 auch für ein Abkratzen der Farbe an geeigneter Stelle sorgen.

In den Fig. 7 bis 10 sind aus Gründen der Übersichtlichkeit keine Dichtungen eingezeichnet worden.

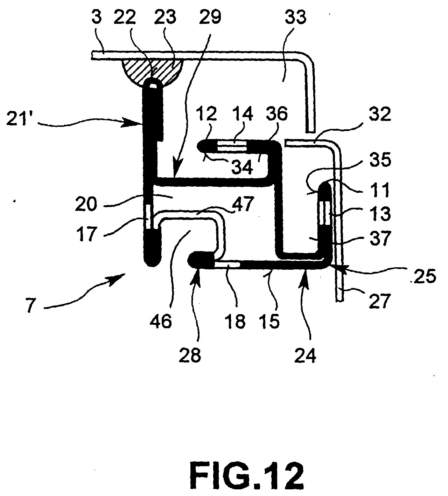

In der Fig. 12 ist eine weitere Variante eines Vertikalprofils 7 dargestellt. Diese Profilform kann selbstverständlich auch für die Horizontalprofile verwendet werden. Im Wesentlichen bezieht sich die Änderung auf die Ausgestaltung des zweiten Außenflächenbereichs 29. Der erste Seitenflächenbereich 28 ist im Wesentlichen identisch zur Variante gemäß Fig. 6 ausgestaltet. Der Dichtsteg 21' umgrenzt bei dieser Ausgestaltung einen Bereich des Hohlraums 20, da die freie Endkante durch Umbördeln hergestellt ist, so dass im Dichtbereich ein dreilagiger Dichtsteg 21' gebildet ist. Der hauptsächliche Unterschied besteht darin, dass die offenen Enden der Einführnuten 36 und 37 nicht aufeinander zuweisen, wie in den anderen Ausführungsbeispielen, sondern voneinander weggerichtet sind. Hierdurch lassen sich sehr viel einfacher eventuelle Befestigungsmittel, z.B. in die Einführnut 37, einschieben. Das Einführen der Befestigungsmittel in die Einführnut 36 erfolgt durch eine Lücke zwischen dem Dichtsteg 21' und der Stirnkante des Befestigungsstegs 12.

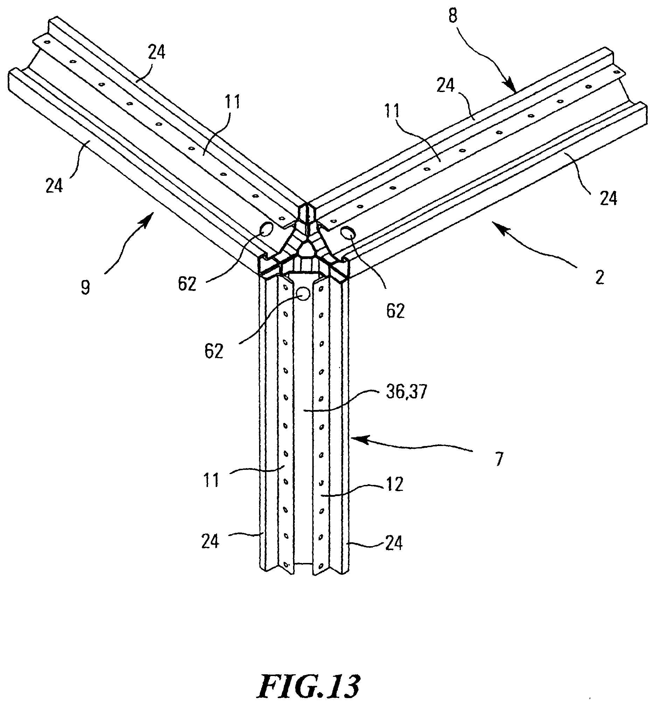

In Fig. 13 ist die obere linke Ecke einer Ausführungsform eines Rahmengestells 2 dargestellt. Ein Eckverbinder ist nicht eingezeichnet, um die aneinander angrenzenden Hohlräume sichtbar zu machen. Anhand dieser Ausführungsform ist zu erkennen, dass das Vertikalprofil 7 symmetrisch zu einer dieses halbierenden Achse ausgestaltet ist. Auch die Befestigungsstege 11 und 12 sind hierdurch symmetrisch zueinander ausgerichtet und weisen mit ihren freien Enden aufeinander zu. Die Einführnut 36', die teilweise von den Befestigungsstegen 11 und 12 umgrenzt wird, ist so ausgestaltet, dass zur Befestigung ein in geeigneter Weise ausgeformtes Befestigungselement in diese einschiebbar ist, um auf gleicher Höhe ein Befestigen an beiden Befestigungsstegen 11 und 12 zu ermöglichen. Die den Deckenrahmen bildenden Horizontalprofile 8 und Querprofile 9 sind nicht symmetrisch ausgestaltet. Diese weisen nur einen einzigen Befestigungssteg 11 auf. Allerdings wird ein größerer Dichtsteg 24 durch die Form der Profile 8 und 9 erzeugt, der eine L-förmige Querschnittsform aufweist und als Hohlprofil ausgestaltet ist. Hierdurch besteht die Möglichkeit, dass an den Befestigungsstegen 11 und 12 mittels Befestigungselementen angebrachte Wandelemente an dieser Stelle eingehängt werden können und gleichzeitig auf eine Dichtung aufsetzbar sind. Die im Eckenbereich dargestellten Öffnungen 62 dienen zur Fixierung des nicht dargestellten Eckverbinders. Die Öffnung 62 und der Eckverbinder sind so ausgestaltet, dass nach dem Zusammenfügen eine automatische Abdichtung an dieser Stelle stattfindet und der zweite Seitenwandbereich 29 wieder als geschlossen anzusehen ist.

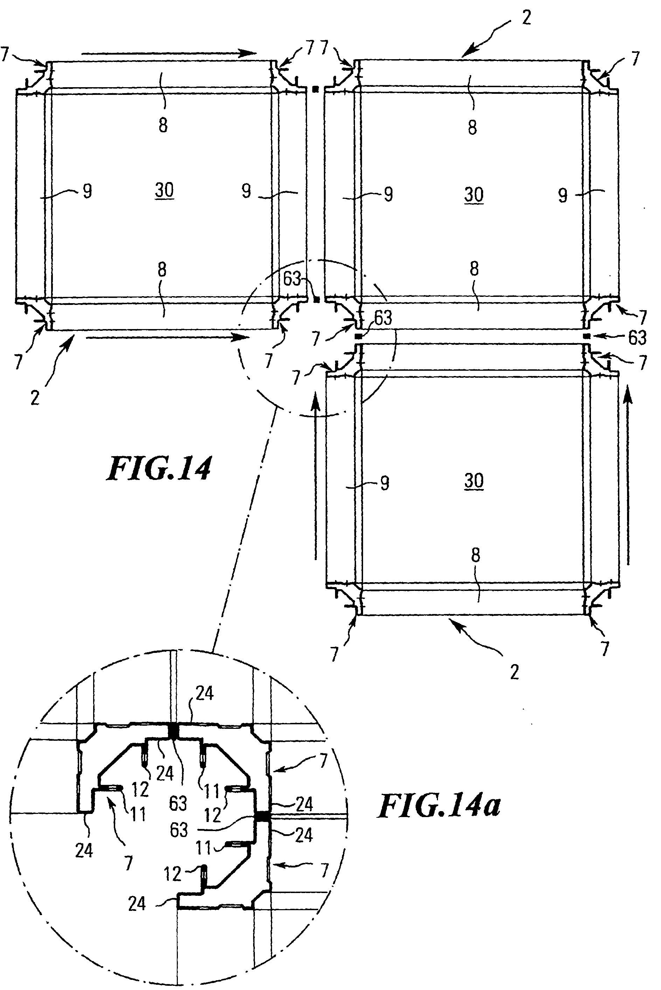

In den Fig. 14 und 14a wird anhand einer Anordnungsvariante ein weiterer Vorteil des in Fig. 13 gezeigten Profils deutlich. Durch die symmetrische Ausgestaltung der Vertikalprofile 7 ist es möglich, Rahmengestelle sowohl seitlich als auch hintereinander mit simpler Zwischenfügung einer Längsdichtung 63 aneinander zu fügen. Die einander zugeordneten Befestigungsstege 11 oder 12 benachbarter Vertikalprofile 7 sind dann parallel zueinander ausgerichtet und geeignete Befestigungsmittel sorgen dann für ein ausreichendes Fixieren der Rahmengestelle aneinander. Die Dichtung wird hierdurch entsprechend mit Druck beaufschlagt und die gewünschte Dichtwirkung erreicht. Eine beliebige Vielzahl derartig ausgestalteter Rahmengestelle lässt sich aneinander fügen, wobei jeweils nur die nach außen weisenden Rahmenprofile, deren Dichtstegrahmen 5 nicht mehr einem weiteren Rahmengestell zugeordnet ist, von Wandelementen abgedeckt werden.

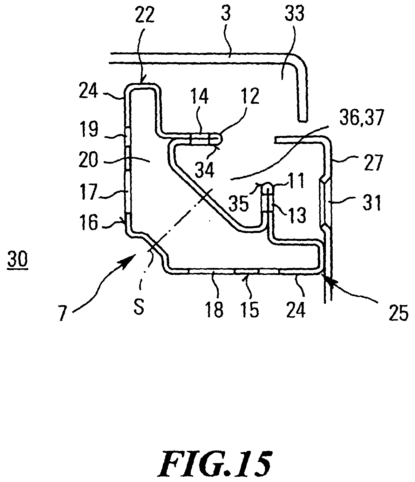

Die Ausgestaltung des in Fig. 13 und 14 dargestellten Vertikalprofils ist in Fig. 15 näher dargestellt. Deutlich ist zu erkennen, dass dieses Profil 7 zu einer Symmetrieachse S symmetrisch ausgestaltet ist. Insbesondere verzichtet dieses Profil auf eine ausgeprägte Ausgestaltung von Zugriffsnuten, wie es in den vorangegangenen Ausführungsbeispielen der Fall ist. Sowohl die beiden Dichtstege 24 als auch die beiden Befestigungsstege 11 und 12 sind senkrecht zueinander ausgerichtet.

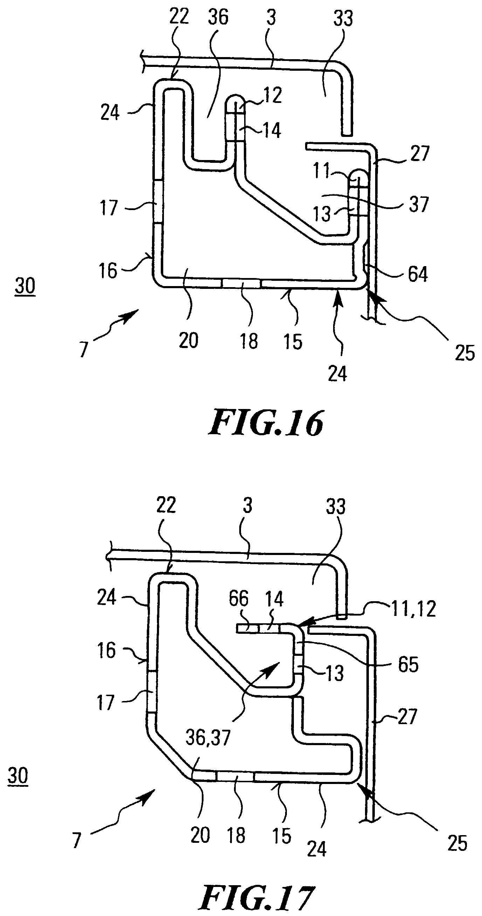

Im Folgenden werden anhand der Fig. 16 bis 22 weitere Querschnittsformen von Rahmenprofilen kurz erläutert. Es wird nur auf die wesentlichen Unterschiede eingegangen. Gleiche und ähnliche Elemente werden mit gleichen Bezugsziffern wie bei den vorangegangenen Ausführungsbeispielen versehen.

Das Vertikalprofil 7 gemäß Fig. 16 weist zwei parallel zueinander ausgerichtete Befestigungsstege 11, 12 auf, so dass auch die Einführnuten 36 und 37 vollständig voneinander getrennt sind. Im vorliegenden Fall erstrecken sich die Befestigungsstege 11 und 12 parallel zu dem Dichtungssteg 24, der Bestandteil des Dichtstegrahmens 5 an der Türseite des Rahmenprofils ist. Der Befestigungssteg 11 schließt sich unmittelbar an die Stirnfläche des anderen Dichtstegs 24 an. Dieser weist entlang seiner Stirnfläche eine Vertiefung 64 auf, in die eine Dichtung einbringbar ist. Bei dieser Variante liegt der Befestigungssteg 11 unmittelbar an der Rückseite eines Seitenwandelementes 27 an. Die Innenseite 15 und die Innenseite 16 des vertikalen Rahmenprofils 7 gehen unmittelbar an einer rechtwinklig ausgestalteten Ecke ineinander über.

Die Fig. 17 zeigt eine Ausführungsform, bei der der Befestigungssteg 11 oder 12 nicht durch doppeltes aufeinander legen während des Rollformvorgangs gebildet ist. Vielmehr weist dieser Befestigungssteg 11 oder 12 im Querschnitt eine L-Form auf, so dass ein erster L-Schenkel 65 und ein zweiter senkrecht dazu angeordneter L-Schenkel 66 vorhanden sind. Jeder der L-Schenkel 65 und 66 ist mit einer eigenen Lochreihe versehen, so dass wiederum die Befestigung in zwei Ebenen möglich ist. Durch diese vorteilhafte Ausgestaltung eines Befestigungsstegs 11 oder 12 in L-Form wird eine sehr kompakte Ausgestaltung erzielt. Die Dichtstege 24 sind wieder senkrecht zueinander angeordnet. Die Innenseiten 15 und 16 verlaufen senkrecht zueinander und gehen an einer abgeschrägten Ecke ineinander über. Durch die Ausgestaltung des Befestigungsstegs 11 oder 12 ist auch nur eine einzige Einführnut 36 oder 37 gebildet.

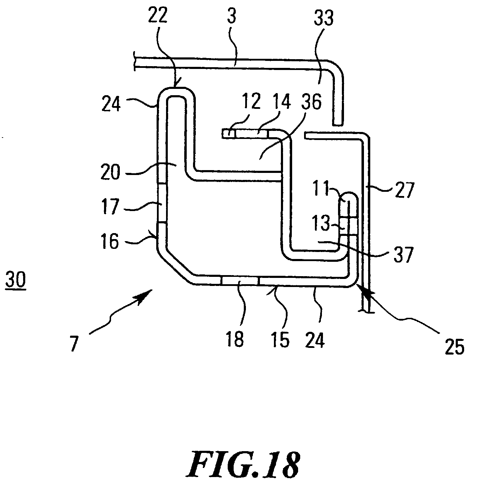

Die Fig. 18 zeigt eine Kombination von einem doppelt aufeinander gefalteten Befestigungssteg 11 und einem einfach angeformten Befestigungssteg 12. Die Anordnung der Befestigungsstege 11 und 12 ist ähnlich der Ausführungsform der Fig. 12. Jedoch ist keine Zugriffsnut 46 vorhanden und der Dichtsteg 24 an der Türseite ist als Bestandteil des Hohlprofils ausgestaltet.

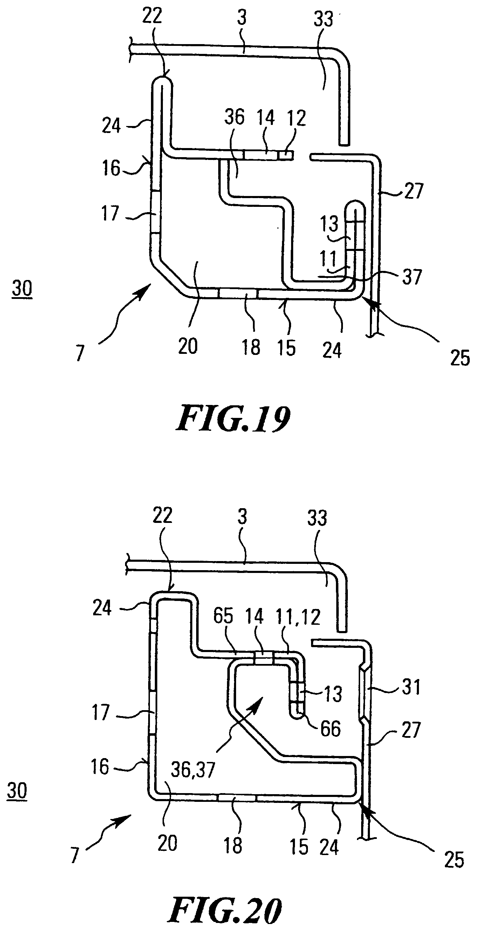

Auch bei der Ausführungsform der Fig. 19 ist wieder der Befestigungssteg 11 als doppelt gefaltetes Profil und der Befestigungssteg 12 als einfache Anformung ausgestaltet. Die freien Enden der Befestigungsstege 11 und 12 weisen aufeinander, so dass zwischen diesen die Einführnuten 36 und 37 gebildet sind. Die Dichtstege 24 sind bei dieser Ausführungsform ebenfalls als doppelt aufeinander gelegte Materialabschnitte ausgestaltet. Der Befestigungssteg 11 schließt sich unmittelbar an das freie Ende des seitlich verlaufenden Dichtstegs 24 an. Auch diese Ausführungsform weist an den Innenseiten 15 oder 16 keine Zugriffsnut auf.

Eine weitere Ausgestaltung ohne Zugriffsnut ist in der Fig. 20 beschrieben. Es handelt sich hierbei um einen L-förmigen Befestigungssteg 11 oder 12, der mit seinem ersten L-Schenkel 65 an dem vorderen Dichtsteg 24 angrenzt und mit dem zweiten L-Schenkel 66 parallel zu einem Seitenwandelement 27 verläuft. Die Dichtstege 24 sind wieder Bestandteil des Hohlprofils, wohingegen der Befestigungssteg 11 oder 12 mit seinen beiden Schenkeln 65, 66 als doppelt gefaltetes Profil ausgestaltet ist.

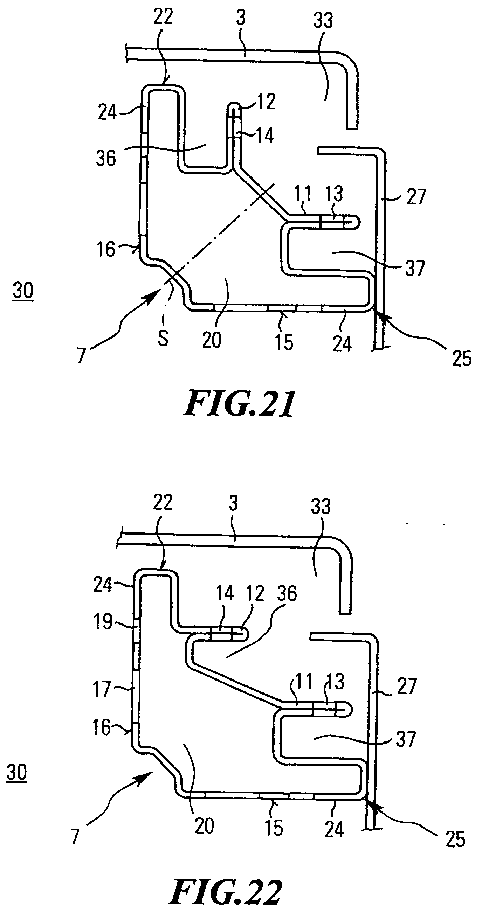

Ein ebenfalls zu einer Symmetrielinie S symmetrisch ausgestaltetes Rahmenprofil ist in der Fig. 21 dargestellt. Die freien Enden der Befestigungsstege 11 und 12 weisen voneinander weg, so dass auch die zwischen den angrenzenden Dichtstegen 24 angeordneten Einführnuten 36 und 37 voneinander getrennt sind. Die Befestigungsstege 11 oder 12 sind jeweils parallel zu ihren unmittelbar angrenzenden Dichtstegen 24 angeordnet. Auch diese Ausführungsform weist keine Zugriffsnut auf. Die Innenseiten 15 und 16 gehen mittels eines schrägen Abschnitts ineinander über

Die Ausführungsform gemäß Fig. 22 weist zwei parallel zueinander ausgerichtete und doppelt aufeinander gefaltete Befestigungsstege 11 und 12 auf, die im Abstand zueinander angeordnet sind. Die Ausrichtung ist derart, dass die Befestigungsstege 11 und 12 parallel zu dem auf das Seitenwandelement 27 aufdrückenden Dichtsteg 24 ausgerichtet sind. Die Dichtstege 24 sind wiederum Bestandteil des Hohlprofils und eine Zugriffsnut, die zum Schaltschrankinnenraum weist, ist nicht vorgesehen.

In den Fig. 15 bis 22 wurde auf die Darstellung von Dichtungen aus Gründen der Übersichtlichkeit verzichtet. Diese werden selbstverständlich bei Bedarf zwischen die Dichtstege 24 und den angrenzenden Wandelementen zwischengefügt.

Aus dem Obigen ergibt sich, dass durch die erfindungsgemäße Ausführungsform die Möglichkeit geschaffen ist, zahlreiche Elemente an dem zweiten Seitenflächenbereich 29 der Profile anzuordnen, ohne dass ein Abdichtungsproblem entsteht. Im Gegensatz zu bislang verwendeten Profilen weisen die im Ausführungsbeispiel verwendeten Profile bereits geeignete Lochreihen am zweiten Seitenflachenbereich 29 auf, die in vielfältiger Weise die angesprochene Anordnungsmöglichkeit bereitstellen.

## Patentansprüche

1. Schaltschrank (1) mit einem Rahmengestell (2) aus mehreren miteinander verbundenen Rahmenprofilen und daran befestigten Abdeckelementen, wie Seiten-, Tür-, Decken-, Rückwand- oder Bodenelemente, wobei jedes Rahmenprofil zwei im Abstand zueinander angeordnete, jeweils auf ein zugeordnetes Abdeckelement aufdrückbare Dichtkanten bzw. -flächen (22, 25) aufweist, wobei die beiden Dichtkanten bzw. -flächen (22, 25) die Außenflächen der Rahmenprofile (7, 8, 9) in einen ersten, dem Schaltschrankinnenraum (30) zugeordneten Seitenflächenbereich (28) und einen zweiten, dem Schaltschrankinnenraum (30) abgewandten Seitenflächenbereich (29) unterteilen,
**dadurch gekennzeichnet,**
dass der zweite Seitenflächenbereich (29) zumindest der vertikalen Rahmenprofile (7) zum Schaltschrankinnenraum (30) hin vollständig geschlossen ist und mindestens einen zwischen den Dichtkanten bzw. -flächen (22, 25) längsverlaufenden, mit einer Lochreihe versehenen und auf der dem Schaltschrankinnenraum (30) abgewandten Außenseite des zweiten Seitenflächenbereichs (29) angeordneten, seitlich abstehenden Befestigungssteg (11, 12) umfaßt, wobei das Befestigen der Abdeckelemente an dem Befestigungssteg (11, 12) außerhalb des Schaltschrankinnenraums (30) ohne Durchdringung der Wandung der Rahmenprofile (7,6,9) zum Innenraum (30) des Schaltschrankes (1) hin erfolgt.

2. Schaltschrank (1) nach Anspruch 1,
**dadurch gekennzeichnet,**
dass der Befestigungssteg (11, 12) im Wesentlichen parallel zu dem zugeordneten, daran befestigten Abdeckelement angeordnet ist.

3. Schaltschrank (1) nach Anspruch 1 oder 2,
**dadurch gekennzeichnet,**
dass zwei Befestigungsstege (11, 12) am zweiten Seitenflächenbereich (29) im Abstand und im rechten Winkel zueinander angeordnet sind.

4. Schaltschrank (1) nach Anspruch 1 oder 2,
**dadurch gekennzeichnet,**
dass zwei Befestigungsstege (11,12) am zweiten Seitenflächenbereich (29) im Abstand und parallel zueinander angeordnet sind.

5. Schaltschrank (1) nach Anspruch 1 oder 2,
**dadurch gekennzeichnet,**
dass der Befestigungssteg (11,12) im Querschnitt eine L-Form aufweist, wobei der erste L-Schenkel (65) im Wesentlichen rechtwinklig zu einem zweiten L-Schenkel (66) angeordnet ist.

6. Schaltschrank (1) nach einem der Ansprüche 1 bis 5,
**dadurch gekennzeichnet,**
dass der Befestigungssteg (11, 12) im Abstand zu einem geschlossenen Wandabschnitt des zweiten Seitenflächenbereichs (29) derart angeordnet ist, dass auf der einem anbringbaren Abdeckelement abgewandten Seite (34, 35) des Befestigungsstegs (11, 12) eine Einführnut (36, 37) gebildet ist, in die seitlich die Lochreihe mündet.

7. Schaltschrank (1) nach einem der Ansprüche 1 bis 6,
**dadurch gekennzeichnet,**
dass zumindest ein Rahmenprofil (7, 8, 9) aus einem Hohlrohrprofil geformt ist und der mindestens eine Befestigungssteg (11, 12) sich von dem Hohlraum (20) des Hohlrohrprofils weg erstreckt, so dass die Lochreihe nicht mit dem Hohlraum (20) in Verbindung steht.

8. Schaltschrank (1) nach Anspruch 7,
**dadurch gekennzeichnet,**
dass der mindestens eine Befestigungssteg (11, 12) unmittelbar an den Hohlraum (30) des Hohlrohrprofils angrenzt.

9. Schaltschrank (1) nach einem der Ansprüche 1 bis 8,
**dadurch gekennzeichnet,**
dass die Hohlrohrprofile durch einen Rollformvorgang hergestellt sind, wobei die Befestigungsstege (11, 12) durch aufeinander Falten zweier Wandabschnitte vom Hohlraum (30) getrennt sind.

10. Schaltschrank (1) nach einem der Ansprüche 1 bis 9,
**dadurch gekennzeichnet,**
dass die Dichtkanten bzw. -flächen (22, 25) von einem Wandbereich des Rahmenprofils (7, 8, 9) geformt sind, der einen Bereich des Hohlraums (30) umgrenzt.

11. Schaltschrank (1) nach einem der Ansprüche 1 bis 10,
**dadurch gekennzeichnet,**
dass die Dichtkante bzw. -fläche (22, 25) von einem Dichtsteg (21, 24) geformt ist.

12. Schaltschrank (1) nach Anspruch 11,
**dadurch gekennzeichnet,**
dass der Dichtsteg (21, 24) eine Stirnfläche aufweist und sich mindestens ein Befestigungssteg (11,12) in Verlängerung der Stirnfläche oder leicht parallel versetzt zu dieser erstreckt.

13. Schaltschrank (1) nach Anspruch 10 oder 11,
**dadurch gekennzeichnet,**
dass sich mindestens ein Befestigungssteg (11, 12) am Fuße des Dichtstegs (21) senkrecht zu diesem erstreckt.

14. Schaltschrank (1) nach einem der Ansprüche 1 bis 13,
**dadurch gekennzeichnet,**
dass in dem ersten Seitenflächenbereich (28) mindestens eine Lochreihe zum Anbringen von Einbauten im Schaltschrankinnenraum (30) vorgesehen ist.

15. Schaltschrank (1) nach Anspruch 14,
**dadurch gekennzeichnet,**
dass durch die Form zumindest eines Bereichs der Wandung des ersten Seitenflächenbereichs (28) mindestens eine Zugriffsnut (39, 40; 46) in den ersten Seitenflächenbereich (28) eingeformt ist, die einen Zugriff auf die Rückseite der mindestens einen Lochreihe gewährt

16. Schaltschrank (1) nach Anspruch 15,
**dadurch gekennzeichnet,**
dass die Zugriffsnut (39, 40; 46) an ihrem Grund Öffnungen (41, 42; 47) aufweist, die mit den Löchern (17, 18) der Lochreihe fluchten.

17. Schaltschrank (1) nach einem der Ansprüche 1 bis 16,
**dadurch gekennzeichnet,**
dass am zweiten Außenflächenbereich (29) an jeweils einem an den Hohlraum (20) angrenzenden Wandbereich eine L-förmige Leiste angeordnet ist, deren erster L-Schenkel im Wesentlichen senkrecht auf dem zugeordneten Wandbereich und deren zweiter L-Schenkel im Wesentlichen parallel zu dem zugeordneten Wandbereich angeordnet ist, wobei der zweite L-Schenkel den Befestigungssteg (11, 12) bildet.

18. Schaltschrank (1) nach Anspruch 17,
**dadurch gekennzeichnet,**
dass die freien Endkanten der Befestigungsstege (11 ,12) voneinander wegweisen.
